# EUROPÄISCHE PATENTSCHRIFT

(11) **EP 1 651 335 B1**
(45) Veröffentlichungstag und Bekanntmachung des Hinweises auf die Patenterteilung: **29.11.2006**
(21) Anmeldenummer: 04739561.1
(22) Anmeldetag: 03.06.2004
(51) Int. Cl.: B01F 5/04, B01F 3/04, B01D 53/86, B01D 53/56, B01D 53/79

(54) **MISCHSYSTEM**
MIXING SYSTEM
SYSTEME DE MELANGE

(30) Priorität: 28.07.2003 DE 10334593
(43) Veröffentlichungstag der Anmeldung: 03.05.2006
(73) Patentinhaber: Framatome ANP GmbH, 91058 Erlangen (DE); Envirgy Environment Energy Engineering Construction GmbH, 1100 Wien (AT)
(72) Erfinder: WALTER, Dirk, D-91090 Effeltrich (DE); BUDIN, Richard, A-2511 Pfaffstätten (AT); WEIGL, Klaus, A-2553 Klausen/Leopldsdorf (AT); GANZMANN, Ingo, 91054 Erlangen (DE)
(74) Vertreter: Walkenhorst, Andreas
(86) Internationale Anmeldenummer: PCT/EP2004/005994
(87) Internationale Veröffentlichungsnummer: WO 2005/021144

(56) Entgegenhaltungen:
- EP-A- 0 526 392
- FR-A- 1 372 655
- US-A- 4 498 786
- US-A1- 2002 031 046

## Beschreibung

Die Erfindung bezieht sich auf ein Mischsystem, das eine Anzahl von in einem Strömungskanal angeordneten Mischelementen mit einer Anzahl von um eine jeweilige Zentralachse herum angeordneten Mischflügeln aufweist, wobei benachbarte Mischflügel der Mischelemente in ihrer Projektionsebene auf die Normalebene der Zentralachse jeweils eine Überschneidung aufweisen, und wobei einigen oder allen Mischelementen in einem Strömungskanal zumindest eine Eindüsestelle zur Einspeisung eines Reaktionsmediums vorgeschaltet ist.

Durch die Mischflügel wird das über die Eindüsestellen einströmende Reaktionsmedium gleichmäßig verteilt. Die Eindüsestelle kann beispielsweise als Rohrstück mit einer Düse als Abschlussstück ausgeführt sein, durch die das zugeführte Reaktionsmedium zerstäubt wird und sich dadurch schneller und möglichst homogen in einem Strömungsmedium verteilen kann. So können beispielsweise verschiedene zuvor eingebrachte Gase miteinander vermischt werden. Derartige Mischsysteme können ebenfalls für die Vermischung von flüssigen oder staubförmigen Stoffen in einem Gasstrom eingesetzt werden. Ihre Verwendung ist ebenfalls in Flüssigkeiten möglich. Eine solche Vermischung von Stoffen in einem Strömungskanal findet beispielsweise bei unterschiedlichsten Katalysatoren eine Anwendung. Insbesondere ist für die katalytische Reduktion von in Ab- oder Rauchgasen enthaltenen Stickoxiden nach dem Verfahren der selektiven katalytischen Reduktion (SCR-Verfahren) die Zudosierung eines Reduktionsmittels in gasförmiger Form zu dem zu entstickenden Abgas- oder Rauchgasstrom erforderlich, und zwar vor dem Katalysator. Als Reduktionsmittel wird dabei üblicherweise ein ammoniakhaltiges Gas, insbesondere ammoniakhaltige Luft oder ammoniakhaltiges rezirkuliertes Rauchgas, in das Rauchgas eingedüst, wobei für eine zuverlässige katalytische Umsetzung eine homogene Feinverteilung des eingedüsten Reduktionsmittels möglichst im gesamten Rauchgasstrom bedeutsam ist.

Bekannte Mischsysteme umfassen ein oder zwei Auslenkelemente, die meist dreieckig ausgeführt sind und mehr oder weniger schräg im Strömungskanal verankert sind. Diese Auslenkelemente erzeugen Wirbel, die stromabwärts zu einer intensiven Durchmischung des Strömungsmediums und aller zugegebener Komponenten führt.

Dokument EP-A-0 526 392 beschreibt ein derart bekanntes Mischsystem.

Allerdings erfolgt eine vollständige Durchmischung mittels derartiger Mischsysteme erst in einem hinreichend großen Abstand hinter dem Mischsystem bzw. hinter den Auslenkelementen. Dieser Abstand wird in der Regel auf die Größe des Kanalquerschnittes bezogen. Bei gasförmigen Stoffen beträgt dieser etwa das zehnbis 20-fache des Kanalquerschnittes. Nachteilig an dieser verzögerten Vermischung ist, dass hinter den Auslenkelementen hinreichend viel Platz vorhanden sein muss, bevor die nachfolgenden Bauelemente, denen die Mischung zugeführt werden soll, angeschlossen werden können. Bei industriellen Anlagen ist dieser Platz jedoch nur sehr knapp bemessen und nicht in ausreichendem Maße verfügbar.

Um eine in Strömungsrichtung gesehen schnellere oder frühere Vermischung zu erreichen, gibt es Mischsysteme, bei denen senkrecht zur Symmetrieachse des Strömungskanals mehrere kleine Auslenkelemente nebeneinander angeordnet sind. Mit derartigen Mischsystemen lässt sich in relativ geringem Abstand von den Auslenkelementen bereits eine gute Vermischung der zuvor in den Gasstrom eingedüsten Gase bzw. eingebrachten Stoffe erreichen. Nachteilig ist jedoch, dass bei der Verwendung von relativ vielen und vergleichsweise kleinen Auslenkelementen zwar lokale Konzentrationsunterschiede der zu vermischenden Stoffe relativ schnell ausgeglichen werden können, während großräumige Konzentrationsunterschiede, beispielsweise zwischen zwei gegenüberliegenden Seiten des Strömungskanals, aber nur unzureichend ausgeglichen werden, da keine großräumige Vermischung im Strömungskanal stattfindet.

Für eine homogenere Vermischung ist es daher weiterhin möglich, Mischsysteme einzusetzen, die durch einen gitterförmigen Einsatz den Strömungskanal zunächst in eine Vielzahl von Teilkanälen aufteilen. Durch eine entsprechende Neigung der Wandungen des Gitters, insbesondere in Strömungsrichtung am Ende des Gitters, bilden diese Auslenkelemente aus. Diese Auslenkelemente sind alternierend in unterschiedliche Richtungen geneigt, so dass die Strömung von benachbarten Teilkanälen in die entgegengesetzte Richtung abgelenkt wird. Dadurch kommt es zu einer Verwirbelung und Vermischung der zu mischenden Substanzen von benachbarten Teilkanälen, aber durch die entstehenden Verwirbelungen auch mit dem Durchstrom der restlichen Teilkanäle. Nachteilig an einem derartigen Mischsystem ist, dass der durch das Mischsystem verursachte Druckabfall bedingt durch die starken Verwirbelungen des Durchsatzes der einzelnen Ausströmkanäle relativ hoch ist.

Der Erfindung liegt daher die Aufgabe zugrunde, ein Mischsystem der oben genannten Art anzugeben, das bei einer homogenen Vermischung für einen niedrigen Druckverlust und eine besonders kurze Durchmischungsstrecke des Mischsystems besonders geeignet ist.

Diese Aufgabe wird erfindungsgemäß gelöst durch ein Mischsystem der oben genannten Art, bei dem die Eindüsestelle zur Einspeisung eines Reaktionsmediums jeweils derart dimensioniert ist, dass das Reaktionsmedium bei seinem Austritt aus der Eindüsestelle eine um einen Überschussfaktor gegenüber dem Strömungsmedium im Strömungskanal erhöhte Austrittsgeschwindigkeit aufweist, und bei dem die Mischelemente derart dimensioniert sind, dass der Quotient aus dem Überschneidungsgrad benachbarter Mischflügel (in Prozent) und dem Überschussfaktor 0,1 bis 5, insbesondere 0,5 bis 2, beträgt.

Die Normalebene der Zentralachse ist dabei gemäß der üblichen Definition diejenige Ebene, zu der die Zentralachse orthogonal ist. Falls das Strömungsmedium im Wesentlichen in Richtung der Zentralachse geführt ist, überschneiden sich somit benachbarte Mischflügel auch bezüglich des Strömungsquerschnitts für das Strömungsmedium.

Die Erfindung geht dabei von der Überlegung aus, dass die für das Mischsystem verfolgten Auslegungsziele, nämlich einerseits eine optimierte Vermischungsintensität, die bereits nach einer kurzen Durchmischungsstrecke eine homogene Konzentration der zu mischenden Substanzen sicherstellt, und andererseits ein für das durchströmende Medium möglichst geringer Druckverlust eigentlich zueinander konträr sind. Ein Mischelement in einem Mischsystem erzeugt nämlich bei einer höheren Durchmischungsrate, die durch einen steileren Anstellwinkel der Mischelemente zum Strömungsmedium erreicht werden kann, prinzipiell durch den höheren Widerstand einen größeren Druckverlust. So wirken sich neben dem Widerstand der Mischelemente selbst ebenfalls die durch diese erzeugten Wirbel steigernd auf den Druckverlust aus.

Um dennoch beiden konträren Auslegungszielen gerecht zu werden, ist zum einen eine besonders gezielte Führung des Strömungsmediums im Bereich des Mischelements vorgesehen. Hierzu ist eine Überlappung oder Überschneidung benachbarter Mischflügel vorgesehen, die beim Durchströmen des Strömungsmediums eine Durchmischungswirkung bzw. Wirbelerzeugung zur Vermischung zusätzlich im Bereich der Überschneidung auslöst. Zum anderen ist für eine Verbesserung der Mischgüte auf kurzer Durchmischungsstrecke eine auf den Überschneidungsgrad benachbarter Mischflügel abgestimmte und auf eine gezielte Feinverteilung des Reaktionsmediums in das Strömungsmedium ausgerichtete Zumischung des Reaktionsmediums vorgesehen. Um dies zu ermöglichen sind die den Mischelementen vorgeschalteten Eindüsestellen spezifisch dimensioniert. Die Eindüsestellen sind dabei jeweils derart dimensioniert, dass das Reaktionsmedium bei seinem Austritt aus der Eindüsestelle eine um einen Überschussfaktor gegenüber einem Strömungsmedium erhöhte Austrittsgeschwindigkeit aufweist. Die wechselseitige Abstimmung der Dimensionierungen von Mischelementen und Eindüsestellen lässt sich mathematisch dadurch beschreiben, dass der Quotient aus dem Überschneidungsgrad benachbarter Mischflügel (in Prozent) und dem Überschussfaktor 0,1 bis 5, insbesondere 0,5 bis 2, beträgt.

Der Überschneidungsgrad zweier benachbarter Mischflügel beträgt dabei in axialer Richtung des Strömungskanals vorzugsweise 5 % bis 100 %. Der Überschussfaktor beträgt vorteilhafterweise 1 bis 15, insbesondere 1,5 bis 5.

Um die Abstimmung zwischen der Eindüsestelle und dem Mischelement weiter zu begünstigen, beträgt der Abstand zwischen dem Austritt der Eindüsestelle und dem Mischelement vorzugsweise 0,05 m bis 2 m, insbesondere 0,2 m bis 0,5 m.

Um den Druckverlust im Strömungskanal besonders gering zu halten, sind die Versorgungsleitungen zu den Eindüsestellen vorteilhafterweise in Strömungsrichtung des Strömungsmediums gesehen hintereinander angeordnet. Damit kommen zumindest einige der Versorgungsleitungen derart hinter den vorgelagerten Leitungen zum Liegen, dass sie den freien Strömungsquerschnitt nicht weiter einschränken und somit eigenständig nicht nennenswert zum Strömungswiderstand beitragen.

Damit das Verteilungsprofil des Reaktionsmediums im Strömungsmedium beim Austritt aus jeder Eindüsestelle den situationsbedingten Strömungsverhältnissen im Strömungskanal besonders gut angepasst werden kann, ist an jeder Versorgungsleitung der zugeordneten Eindüsestelle vorzugsweise ein Ventil angeordnet, mit dem der Volumenstrom des Reaktionsmediums eingestellt werden kann.

Zur effektiven Vermeidung eines Druckverlustes innerhalb einer Versorgungsleitung mit einfachen Mitteln, ist in weiterer oder alternativer Ausgestaltung der Durchmesser jeder Versorgungsleitung vorzugsweise derart dimensioniert, dass die Mediengeschwindigkeit in den Versorgungsleitungen das 0,3- bis 1-fache der Austrittsgeschwindigkeit am Austritt der Eindüsestelle beträgt.

Um ein Mischsystem an die Strömungsgeschwindigkeit des Strömungsmediums, die gewünschte Mischgüte in einer vorgegebenen Entfernung zum Mischsystem und für einen entsprechenden Druckverlust anzupassen, kann die Anzahl der Mischflügel vorzugsweise variiert werden. Das Mischsystem kann so an verschiedene Betriebszustände und Anforderungen der umgebenden technischen Anlage angepasst werden, indem das Mischsystem beispielsweise an die Geschwindigkeit und die Zusammensetzung des Strömungsmediums im Strömungskanal angepasst wird oder eine entsprechende Anpassung an die Vorgabe der Mischgüte und der Austrittsgeschwindigkeit für die Weiterverarbeitung des Strömungsmediums vorliegt. Außerdem kann die Anzahl der Mischflügel für eine eventuelle Umrüstung der Anlage verändert werden. In besonders vorteilhafter Ausgestaltung des Mischsystems weist jedes Mischelement vorzugsweise drei bis acht Mischflügel auf.

Besonders homogene Strömungsverhältnisse sind erreichbar, indem die Mischflügel vorteilhafterweise rotationssymmetrisch um die Zentralachse herum angeordnet sind, so dass benachbarte Mischflügel einen gleichmäßigen Winkelversatz zueinander aufweisen.

Für eine Variierung der Parameter eines derartigen Mischsystems kann bereits bei seiner Herstellung vorteilhafterweise die Neigung der Mischflügel zur Normalebene der Zentralachse und somit auch zur Querschnittsebene des Strömungskanals verändert werden. Durch eine Veränderung des Neigungswinkels der Mischflügel lassen sich ebenfalls die Parameter der Mischgüte in einem definierten Abstand vom Mischsystem und der vom Mischsystem erzeugte Druckverlust gegeneinander verstellen. Bei der Verstellung des Neigungswinkels tritt einerseits eine Widerstandsänderung für das Strömungsmedium der einzelnen Mischflügel auf, und andererseits verändert sich der Überschneidungsgrad der einzelnen Mischflügel, wodurch sich die Charakteristika des gesamten Mischsystems bzw. dessen Parameter verändern.

Für die Erzeugung von Wirbeln im Strömungsmedium sind die Mischflügel zweckmäßigerweise in einem vorgegeben Neigungswinkel zur Normalebene der Zentralachse und somit auch zur Querschnittsebene des Strömungskanals geneigt. Dadurch wird das axial durch den Strömungskanal strömende Strömungsmedium im Bereich eines jeden Mischflügels in Umfangsrichtung des Strömungskanals abgelenkt, so dass es sich durch die dadurch entstehenden Wirbel unmittelbar im Anschluss an das Mischsystem vermischt. Der Neigungswinkel der Mischflügel beträgt vorteilhafterweise 15° bis 90° und in besonders vorteilhafter Ausgestaltung 30° bis 60° zur Querschnittsebene des Strömungskanals.

Für eine ausreichend hohe Mischwirkung des Mischsystems überdecken die Mischflügel aller Mischelemente in ihrer Projektion auf die Normalebene und somit in Querschnittsrichtung des Strömungskanals zweckmäßigerweise gemeinsam einen vorgegebenen Nennanteil der Fläche des Querschnittes des Strömungskanals. Dieser Nennanteil beträgt vorzugsweise 50 % bis 100 %. Das Mischsystem kann also bis zum Rand des Strömungskanals ausgeführt sein, so dass die Mischflügel mit der Wand des Strömungskanals abschließen. Dies kann sowohl bei kreisrunden Strömungskanälen als auch bei Strömungskanälen mit einem anderen Querschnitt durch eine entsprechende Ausgestaltung der Mischflügel erreicht werden. Das Mischsystem kann jedoch auch für einen höheren Durchsatz des Strömungsmediums im Bereich des Mischsystems und damit für einen geringeren Druckverlust ausgelegt sein, indem die Mischflügel nicht bis zur Wand des jeweiligen Strömungskanals oder Teilkanals reichen. Die Mischwirkung und Mischgüte eines derartigen Mischsystems ist im Vergleich zu der oben beschriebenen Ausführung mit größeren Mischflügeln verringert.

In besonders vorteilhafter Ausgestaltung ist bei runden und quadratischen Querschnitten des Strömungskanals mindestens eine Eindüsestelle vorgesehen. Bei anderen geometrischen Querschnitten sind vorzugsweise mindestens zwei Eindüsestellen vorgesehen.

Eine besonders homogene und gleichmäßige Verteilung des zugeführten Reaktionsmediums ist dabei erreichbar, indem jede Eindüsestelle vorteilhafterweise jeweils auf der Zentralachse des zugeordneten Mischelements angeordnet ist.

Verwendung findet ein oben beschriebenes Mischsystem zweckmäßigerweise zur Vermischung eines Reaktionsmediums mit einem Strömungsmedium, wobei sich beide Medien in ihrer Temperatur, Viskosität, Dichte und/oder ihrer chemischen Zusammensetzung unterscheiden.

Eine derartige Vermischung von Stoffen in einem Strömungskanal findet beispielsweise bei unterschiedlichsten Katalysatoren eine Anwendung. Insbesondere wird ein oben beschriebenes Mischsystem für die katalytische Reduktion von in Ab- oder Rauchgasen enthaltenen Stickoxiden nach dem Verfahren der selektiven katalytischen Reduktion (SCR-Verfahren) verwendet. Dabei wird als Reaktionsmedium vorzugsweise ein ammoniakhaltiges Gas, insbesondere ammoniakhaltige Luft oder ammoniakhaltiges rezirkuliertes Rauchgas, eingesetzt und in das Rauchgas als Strömungsmedium eingedüst.

Die Vorteile der Erfindung bestehen insbesondere in der kurzen Mischdistanz bei einem geringen Druckverlust des oben beschriebenen Mischsystems, die insbesondere durch die Überschneidung der Mischflügel und die Austrittsgeschwindigkeit des Reaktionsmediums erreicht werden kann. Die Überschneidung benachbarter Mischflügel kann bis zu einem Bereich verringert werden, der etwa dem Strömungskanalquerschnitt entspricht. Ein weiterer Vorteil des Mischsystems besteht in der hohen Flexibilität und den Möglichkeiten der Anpassung. So kann über die Kombination von Mischflügelanzahl, dem Überschneidungsgrad benachbarter Mischflügel, der Mischflügelneigung sowie der Austrittsgeschwindigkeit des Reaktionsmediums eine genaue Einstellung der Verteilung des einzumischenden Reaktionsmediums und damit der Mischgüte, der Mischlänge und des verursachten Druckverlustes eingestellt werden.

Ein Ausführungsbeispiel der Erfindung wird anhand einer Zeichnung näher erläutert. Darin zeigen:
- Fig. 1: ausschnittsweise ein Mischsystem mit einem Mischelement,
- Fig. 2: das Mischsystem nach Fig. 1 in perspektivischer Ansicht, und
- Fig. 3: das Mischsystem nach Fig. 1 in Seitenansicht.

Gleiche Teile sind in allen Figuren mit denselben Bezugszeichen versehen.

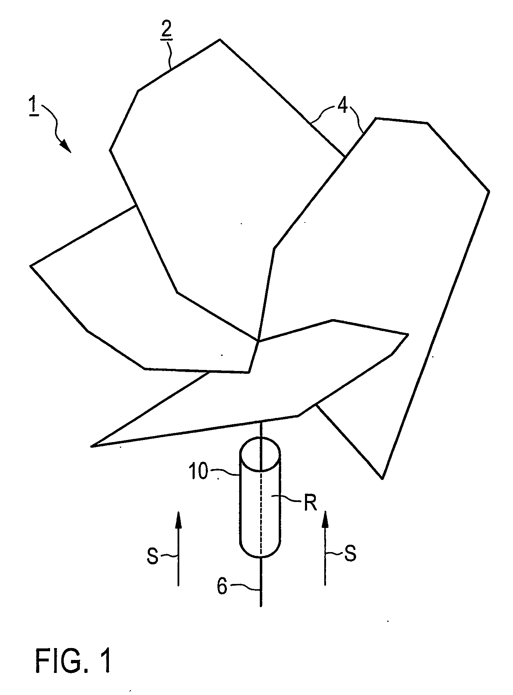

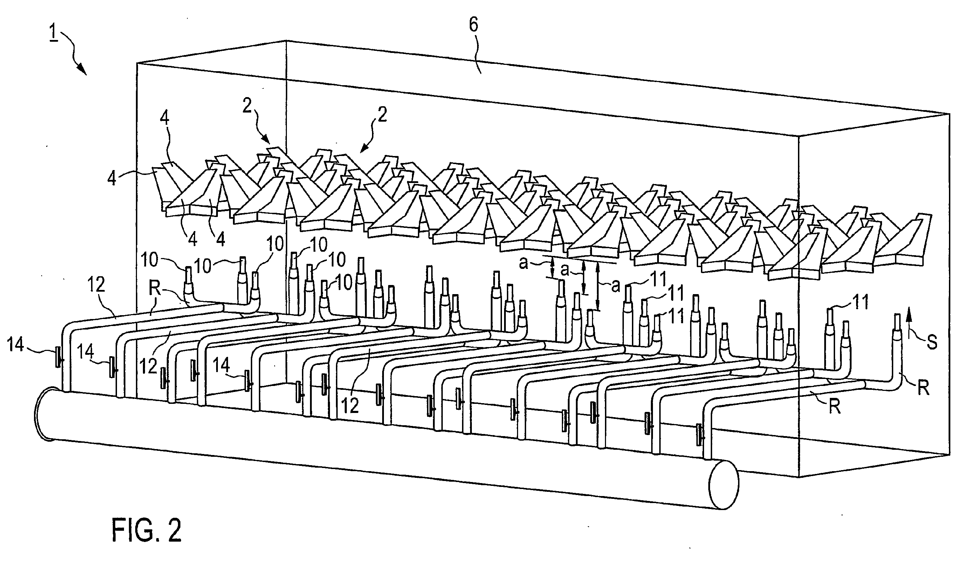

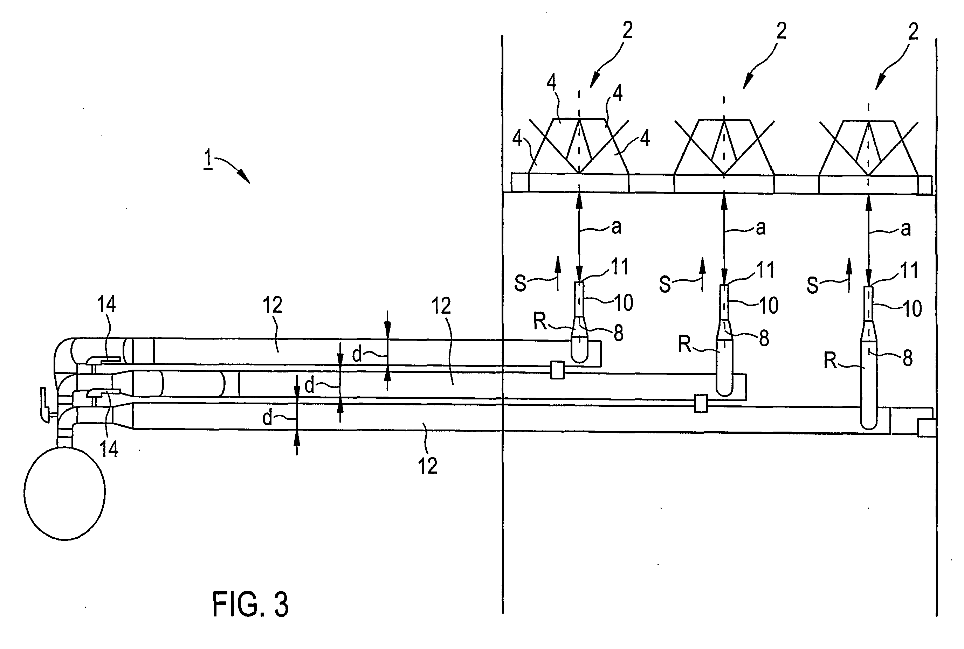

Das in den Fig. 1 bis 3 gezeigte Mischsystem 1 umfasst eine Mehrzahl gitterartig in einer Bestückungsebene angeordneter Mischelemente 2, von denen in Fig. 1 lediglich ein Mischelement 2 gezeigt ist und in Fig. 3 drei Mischelemente 2 gezeigt sind. Im Ausführungsbeispiel setzt sich das Mischelement 2 aus vier geneigten Mischflügeln 4 zusammen, die um eine Zentralachse 6 des Mischelements 2 herum angeordnet sind. Die Mischflügel 4 dienen zur Erzeugung von Wirbeln eines in einem dem Mischelement 2 vorgeschalteten Strömungskanal 6 geführten Strömungsmediums S. Die Wirbel entstehen dabei durch eine durch die Mischflügel 4 erzeugte Ablenkung des in axialer Richtung des lediglich in Fig. 2 gezeigten Strömungskanals 6 und parallel zur Zentralachse 8 strömenden Strömungsmediums S in Umfangsrichtung des Strömungskanals 6 und homogenisieren dieses. Für eine gleichmäßige Mischwirkung sind die Mischflügel 4 in einem gleichmäßigen Winkelversatz zueinander angeordnet. Im Ausführungsbeispiel beträgt der Winkelversatz 90°.

Die Mischflügel 4 können insbesondere in einem Winkel von 15° bis 90°, vorzugsweise 30° bis 60°, zur Querschnittsebene des Strömungskanals 6 geneigt sein. Über diese Neigung lässt sich die Mischgüte in einem vorgegebenen Abstand in Strömungsrichtung hinter dem Mischsystem 1 gegenüber dem Druckverlust des Strömungsmediums S verstellen.

In Fig. 1 ist besonders gut erkennbar, dass benachbarte Mischflügel 4 in ihrer Projektion auf die Normalebene der Zentralachse 8 jeweils eine Überschneidung aufweisen. Dadurch trägt auch der Überschneidungsgrad zur Wirbelerzeugung bei, so dass die Neigung der Mischflügel 4 vergleichsweise gering gehalten werden kann, und sich dadurch auch bei hoher Mischwirkung der Druckverlust durch das Mischsystem 1 minimieren lässt. Die Mischflügel 4 aller Mischelemente 2 können dabei in ihrer Projektion auf die Normalebene der Zentralachse 8 einen Nennanteil von 50 % bis 100 % der Querschnittsfläche des Strömungskanals 6 überdecken, so dass eine Abstimmung der Strömungsgeschwindigkeit gegenüber der Mischgüte vorgenommen werden kann.

Im in Fig. 2 gezeigten Strömungskanal 6 ist auf der Zentralachse 8 im Ausführungsbeispiel vor jedem Mischelement 2 eine Eindüsestelle 10 für ein Reaktionsmedium R angeordnet. Die Eindüsestelle 10 ist dabei für eine weitgehende Vernebelung des Reaktionsmediums R und dessen Feinverteilung im Strömungsmedium S ausgelegt. Beim anschließenden Eintritt des mit dem Reaktionsmedium R beaufschlagten Strömungsmediums S in das Mischelement 2 erfolgt durch die durch dieses bewirkte Verwirbelung eine Homogenisierung des gesamten Medienstroms, so dass eine besonders innige und gleichmäßige Vermischung von Strömungsmedium S und Reaktionsmedium R gewährleistet ist.

Um die beiden eigentlich konträren Auslegungsziele für das Mischsystem 1, nämlich einerseits eine optimierte Vermischungsintensität nach einer kurzen Durchmischungsstrecke und andererseits einen für das durchströmende Medium möglichst geringen Druckverlust, zu erreichen, sind die Dimensionierungen der Mischelemente 2 und der Eindüsestellen 10 wechselseitig derart aufeinander abgestimmt, dass der Quotient aus dem Überschneidungsgrad zweier benachbarter Mischflügel 4 (in Prozent) und dem Überschussfaktor, um welchen die Austrittsgeschwindigkeit des Reaktionsmediums R aus der Eindüsestelle 10 die Geschwindigkeit des Strömungsmediums S im Strömungskanal 6 übersteigt, 0,1 bis 5, insbesondere 0,5 bis 2, beträgt.

Um die Abstimmung zwischen der Eindüsestelle 10 und dem Mischelement 2 weiter zu begünstigen, beträgt der Abstand a zwischen dem Austritt 11 der Eindüsestelle 10 und dem Mischelement 2 vorzugsweise 0,05 m bis 2 m, insbesondere 0,2 m bis 0,5 m.

Wie in der Fig. 2 und der Fig. 3 gezeigt, ist jeder Eindüsestelle 10 eine Versorgungsleitung 12 zugeordnet. Mehrere Versorgungsleitungen 12 sind dabei, wie besonders in Fig. 3 gezeigt, in Strömungsrichtung hintereinander angeordnet. Dadurch wird der Druckverlust im Strömungskanal 6 besonders gering gehalten.

Ferner ist an jeder Versorgungsleitung 12 der betreffenden Eindüsestelle 10 ein Ventil 14 angeordnet. Damit kann der Volumenstrom des Reaktionsmediums R individuell dosiert und eingestellt werden, so dass das Verteilungsprofil des Reaktionsmediums R im Strömungsmedium S besonders schnell und effektiv beeinflusst werden kann.

In weiterer Ausgestaltung ist im Ausführungsbeispiel der Durchmesser d jeder Versorgungsleitung 12 derart dimensioniert, dass die Mediengeschwindigkeit in den Versorgungsleitungen 12 das 0,3- bis 1-fache der Austrittsgeschwindigkeit am Austritt 11 der Eindüsestelle 10 beträgt. Dadurch ist mit einfachen Mitteln ein Druckverlust innerhalb einer Versorgungsleitung 12 effektiv vermieden.

### Bezugszeichenliste

- 1: Mischsystem
- 2: Mischelement
- 4: Mischflügel
- 6: Strömungskanal
- 8: Zentralachse
- 10: Eindüsestelle
- 11: Austritt
- 12: Versorgungsleitung
- 14: Ventil

- R: Reaktionsmedium
- S: Strömungsmedium
- a: Abstand
- d: Durchmesser

## Patentansprüche

1. Mischsystem (1), das eine Anzahl von in einem Strömungskanal (6) angeordneten Mischelementen (2) mit einer Anzahl von um eine jeweilige Zentralachse (8) herum angeordneten Mischflügeln (4) aufweist, wobei benachbarte Mischflügel (4) der Mischelemente (2) in ihrer Projektionsebene auf die Normalebene der Zentralachse (8) jeweils eine Überschneidung aufweisen, und wobei einigen oder allen Mischelementen (2) in einem Strömungskanal (6) zumindest eine Eindüsestelle (10) zur Einspeisung eines Reaktionsmediums (R) vorgeschaltet ist, **dadurch gekennzeichnet dass** die Eindüsestelle (10) jeweils derart dimensioniert ist, dass das Reaktionsmedium (R) bei seinem Austritt (11) aus der Eindüsestelle (10) eine um einen Überschussfaktor gegenüber dem Strömungsmedium (S) im Strömungskanal (6) erhöhte Austrittsgeschwindigkeit aufweist, und bei dem die Mischelemente (2) derart dimensioniert sind, dass der Quotient aus dem Überschneidungsgrad benachbarter Mischflügel (4) (in Prozent) und dem Überschussfaktor 0,1 bis 5, insbesondere 0,5 bis 2, beträgt.

2. Mischsystem (1) nach Anspruch 1, bei dem der Überschneidungsgrad benachbarter Mischflügel (4) 5 % bis 100 % beträgt.

3. Mischsystem (1) nach Anspruch 1 oder 2, bei dem der Überschussfaktor 1 bis 15, insbesondere 1,5 bis 5, beträgt.

4. Mischsystem (1) nach einem der vorhergehenden Ansprüche, bei dem der Abstand (a) zwischen dem Austritt (11) der Eindüsestelle (10) und dem Mischelement (2) 0,05 m bis 2 m, insbesondere 0,2 m bis 0,5 m, beträgt.

5. Mischsystem (1) nach einem der vorhergehenden Ansprüche, bei dem Versorgungsleitungen (12) zu den Eindüsestellen (10) in Strömungsrichtung des Strömungsmediums (S) gesehen hintereinander angeordnet sind.

6. Mischsystem (1) nach Anspruch 5, bei dem an jeder Versorgungsleitung (12) ein Ventil (14) zur Einstellung des Volumenstroms des Reaktionsmediums (R) angeordnet ist.

7. Mischsystem (1) nach Anspruch 5 oder 6, bei dem der Durchmesser (d) jeder Versorgungsleitung (12) derart dimensioniert ist, dass die Mediengeschwindigkeit in den Versorgungsleitungen (12) das 0,3- bis 1-fache der Austrittsgeschwindigkeit am Austritt (11) der Eindüsestelle (10) beträgt.

8. Mischsystem (1) nach einem der vorhergehenden Ansprüche, bei dem jedes Mischelement (2) drei bis acht Mischflügel (4) aufweist.

9. Mischsystem (1) nach einem der vorhergehenden Ansprüche, bei dem die Mischflügel (4) mit gleichmäßigem Winkelversatz um die Zentralachse (8) angeordnet sind.

10. Mischsystem (1) nach einem der vorhergehenden Ansprüche, bei dem die Mischflügel (4) in einem Neigungswinkel von 15° bis 90°, insbesondere 30° bis 60°, zur Normalebene der Zentralachse (8) geneigt sind.

11. Mischsystem (1) nach einem der vorhergehenden Ansprüche, bei dem die Mischflügel (4) aller Mischelemente (2) in ihrer Projektion auf die Normalebene der Zentralachse (8) einen Nennanteil von 50 % bis 100 % der Querschnittsfläche des Strömungskanals (6) überdecken.

12. Mischsystem (1) nach einem der vorhergehenden Ansprüche, bei dem bei runden oder quadratischen Querschnitten des Strömungskanals (6) mindestens eine Eindüsestelle (10) vorgesehen ist, und bei dem bei anderen geometrischen Querschnitten mindestens zwei Eindüsestellen (10) vorgesehen sind.

13. Mischsystem (1) nach einem der vorhergehenden Ansprüche, bei dem jede Eindüsestelle (10) derart jeweils einem Mischelement (2) zugeordnet ist, dass sie auf dessen Zentralachse (8) angeordnet ist.

14. Mischsystem (1) nach einem der vorhergehenden Ansprüche, bei dem als Reaktionsmedium (R) ein ammoniakhaltiges Gas, insbesondere ammoniakhaltige Luft oder ammoniakhaltiges rezirkuliertes Rauchgas, eingesetzt ist.

15. Verwendung eines Mischsystems (1) nach einem der vorhergehenden Ansprüche zur Vermischung eines Reaktionsmediums (R) mit einem Strömungsmedium (S), wobei sich beide Medien in ihrer Temperatur, Viskosität, Dichte und/oder ihrer chemischen Zusammensetzung unterscheiden.

16. Verwendung eines Mischsystems (1) nach einem der Ansprüche 1 bis 14 zur Aufbereitung eines Ab- oder Rauchgases als Strömungsmedium (S) in einem SNCR- oder SCR-Verfahren.

## Claims

1. Mixing system (1), which has a number of mixing elements (2) which are arranged in a flow passage (6) and have a number of mixing vanes (4) arranged around a respective centre axis (8), adjacent mixing vanes (4) of the mixing elements (2) in their projection plane onto the normal plane to the centre axis (8) in each case having an overlap, and at least one injection location (10) for the injection of a reaction medium (R) being connected upstream of some or all of the mixing elements (2) in a flow passage (6), **characterized in that** the injection location (10) is in each case dimensioned in such a manner that the reaction medium (R) at its exit (11) from the injection location (10) has an exit velocity which is higher by an excess factor than the flow medium (s) in the flow passage (6), and in which system the mixing elements (2) are dimensioned in such a manner that the quotient formed from the degree of overlap of adjacent mixing vanes (4) (in per cent) and the excess factor is from 0.1 to 5, in particular from 0.5 to 2.

2. Mixing system (1) according to Claim 1, in which the degree of overlap between adjacent mixing vanes (4) is from 5% to 100%.

3. Mixing system (1) according to Claim 1 or 2, in which the excess factor is from 1 to 15, in particular from 1.5 to 5.

4. Mixing system (1) according to one of the preceding claims, in which the distance (a) between the exit (11) of the injection location (10) and the mixing element (2) is from 0.05 m to 2 m, in particular from 0.2 m to 0.5 m.

5. Mixing system (1) according to one of the preceding claims, in which supply lines (12) leading to the injection locations (10) are arranged in succession as seen in the direction of flow of the flow medium (S).

6. Mixing system (1) according to Claim 5, in which a valve (14) for setting the volumetric flow of the reaction medium (R) is arranged at each supply line (12).

7. Mixing system (1) according to Claim 5 or 6, in which the diameter (d) of each supply line (12) is dimensioned in such a manner that the velocity of the medium in the supply lines (12) is from 0.3 to 1 times the exit velocity at the exit (11) of the injection location (10).

8. Mixing system (1) according to one of the preceding claims, in which each mixing element (2) has from 3 to 8 mixing vanes (4).

9. Mixing system (1) according to one of the preceding claims, in which the mixing vanes (4) are arranged with a uniform angle offset around the centre axis (8).

10. Mixing system (1) according to one of the preceding claims, in which the mixing vanes (4) are inclined at an angle of inclination of 15° to 90°, in particular 30° to 60°, to the normal plane to the centre axis (8).

11. Mixing system (1) according to one of the preceding claims, in which the mixing vanes (4) of all the mixing elements (2), in their projection onto the normal plane to the centre axis (8), cover a nominal proportion of from 50% to 100% of the cross-sectional area of the flow passage (6).

12. Mixing system (1) according to one of the preceding claims, in which in the case of round or square cross sections of the flow passage (6) at least one injection location (10) is provided, and in which in the case of other geometric cross sections at least two injection locations (10) are provided.

13. Mixing system (1) according to one of the preceding claims, in which each injection location (10) is assigned to a respective mixing element (2), in such a manner that it is arranged on the centre axis (8) thereof.

14. Mixing system (1) according to one of the preceding claims, in which the reaction medium (R) used is an ammonia-containing gas, in particular ammonia-containing air or ammania-cnntaining recirculated flue gas.

15. Use of a mixing system (1) according to one of the preceding claims for mixing a reaction medium (R) with a flow medium (S), in which the two media differ in terms of their temperature, viscosity, density and/or chemical composition.

16. Use of a mixing system (1) according to one of Claims 1 to 14 for treating an exhaust or flue gas as flow medium (S) in an SNCR or SCR process.

## Revendications

1. Système (1) de mélange, qui comporte une pluralité d'éléments (2) mélangeurs disposés dans un canal (6) d'écoulement, ayant une pluralité d'ailettes (4) de mélange disposées autour d'un axe (8) central respectif, des ailettes (4) de mélange voisines des éléments (2) de mélange comportant, dans leur plan de projection sur le plan normal à l'axe (8) central, un chevauchement, et dans lequel au moins un point (10) d'injection pour fournir un milieu (R) de réaction est monté en amont de certains ou de tous les éléments (2) de mélange dans un canal (6) d'écoulement, **caractérisé en ce que** le point (10) d'injection est dimensionné de sorte que le milieu (R) de réaction a une vitesse de sortie augmentée par rapport à celle du milieu (S) d'écoulement dans le canal (6) d'écoulement au point (10) d'injection d'un facteur en excès, et les éléments (2) mélangeurs sont dimensionnés de sorte que le rapport du degré de chevauchement d'ailettes (4) de mélange voisines en pourcentage sur le facteur en excès est compris entre 0,1 et 5, notamment entre 0,5 et 2.

2. Système (1) de mélange suivant la revendication 1, dans lequel le degré de chevauchement d'ailettes (4) de mélange voisines est compris entre 5 % et 100 %.

3. Système (1) de mélange suivant la revendication 1 ou 2, dans lequel le facteur d'excès est compris entre 1 et 15, notamment entre 1,5 et 5.

4. Système (1) de mélange suivant l'une des revendications précédentes, dans lequel la distance (a) entre la sortie (11) du point (10) d'injection et l'élément (2) de mélange est compris entre 0,05 m et 2 m, notamment entre 0,2 m et 0,5 m.

5. Système (1) de mélange suivant l'une des revendications précédentes, dans lequel des conduits (12) d'alimentation vers le point (10) d'injection sont disposés les uns derrière les autres, vus dans la direction d'écoulement du milieu (S) d'écoulement.

6. Système (1) de mélange suivant la revendication 5, dans lequel il est disposé à chaque conduit (12) d'alimentation une soupape (14) pour le réglage du courant volumique du milieu (R) de réaction.

7. Système (1) de mélange suivant la revendication 5 ou 6, dans lequel le diamètre (D) de chaque conduit (12) d'alimentation est dimensionné de sorte que la vitesse du milieu dans les conduits (12) d'alimentation est comprise entre 0,3 et 1 fois la vitesse de sortie à la sortie (11) du point (10) d'injection.

8. Système (1) de mélange suivant l'une des revendications précédentes, dans lequel chaque élément (2) de mélange comporte de trois à huit ailettes (4) de mélange.

9. Système (1) de mélange suivant l'une des revendications précédentes, dans lequel les ailettes (4) de mélange sont disposées décalées angulairement de manière régulière autour de l'axe (8) central.

10. Système (1) de mélange suivant l'une des revendications précédentes, dans lequel les ailettes (4) de mélange sont inclinées d'un angle d'inclinaison compris entre 15° et 90°, notamment entre 30° et 60°, par rapport au plan normal à l'axe (8) central.

11. Système (1) de mélange suivant l'une des revendications précédentes, dans lequel, les ailettes (4) de mélange de tous les éléments (2) de mélange recouvrent, dans leur projection sur le plan normal de l'axe (8) central, une partie nominale comprise entre 50 % et 100 % de la section transversale du canal (6) d'écoulement.

12. Système (1) de mélange suivant l'une des revendications précédentes, dans lequel il est prévu, pour des sections transversales rondes ou quadratiques du canal (6) d'écoulement, au moins un point (10) d'injection et, dans le cas d'autres formes de sections transversales géométriques, au moins deux points (10) d'injection.

13. Système (1) de mélange suivant, l'une des revendications précédentes, dans lequel chaque point (10) d'injection est associé à un élément (2) de mélange, de sorte qu'il soit disposé sur son axe (8) central.

14. Système (1) de mélange suivant l'une des revendications précédentes, dans lequel il est utilisé, en tant que milieu (R) de réaction, un gaz contenant de l'ammoniac, notamment de l'air contenant de l'ammoniac ou des gaz de fumée recyclés contenant de l'ammoniac.

15. Utilisation d'un système (1) de mélange suivant l'une des revendications précédentes pour mélanger un milieu (R) de réaction avec un milieu (S) d'écoulement, les deux milieux étant différents en ce qui concerne leur température, leur viscosité, leur épaisseur et/ou leur composition chimique.

16. Utilisation d'un système (1) de mélange suivant l'une des revendications 1 à 14 pour préparer un gaz de fumée ou un gaz d'échappement en tant que milieu (S) d'écoulement dans un procédé SNCR ou SCR.
